(19)

Europäisches
Patentamt
European
Patent Office
Office européen
des brevets

(11) **EP 4 687 055 A1**

(12) **EUROPEAN PATENT APPLICATION**

(43) Date of publication:
**04.02.2026 Bulletin 2026/06**

(21) Application number: **24305777.5**

(22) Date of filing: **30.07.2024**

(51) International Patent Classification (IPC):
**G06F 21/55** (2013.01)    **G06N 3/094** (2023.01)
**G06N 3/048** (2023.01)

(52) Cooperative Patent Classification (CPC):
**G06F 21/554; G06F 21/577; G06N 3/045;**
**G06N 3/08; G06N 3/094;** G06N 3/048

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **THALES DIS FRANCE SAS**
**92190 Meudon (FR)**

(72) Inventors:
• **LE ROUX, Quentin**
  **13600 LA CIOTAT (FR)**
• **TEGLIA, Yannick**
  **13720 BELCODENE (FR)**
• **BOURBAO, Eric**
  **83330 LE BEAUSSET (FR)**

(74) Representative: **Bricks, Amélie**
**Thales Dis France SAS**
**Intellectual Property Department**
**6, rue de la Verrerie**
**92190 Meudon (FR)**

(54) **BACKDOOR DETECTION USING LAYER-WISE DISTINGUISHABILITY**

(57)    The present invention relates to a method for protecting a neural network based artificial intelligence system having a deep neural network (DNN) against backdoor attacks, wherein the DNN is used by the artificial intelligence system to classify data elements into a set of classes, the method comprising:
-a set-up phase (901) including:
for a plurality of data elements in a dataset of benign data, for each layer of neurons of a plurality of layers of the DNN computing characteristic values based on neuron activation values of neurons of said each layer of the plurality of layers of the DNN thereby computing a layerwise time series library of characteristic values for each data element;
- a testing phase (903) including:
receiving a data element under test;
for the input data element, for each layer of neurons of the DNN computing characteristic values based on neuron activation values of said each layer of the plurality of layers of the DNN thereby computing a time series of characteristic values for the data element under test;
computing a probability that data element under test contains a backdoor trigger based on comparing the time series of characteristic values for the data element under test to the layerwise time series library of characteristic values for each data element;
if the probability that data element under test contains a backdoor trigger exceeds a threshold, take a corrective action (917).

Fig. 9

**Description**

**BACKGROUND OF THE INVENTION**

The present invention relates generally to neural networks, and in particular to securing devices and software systems using neural networks against backdoor attacks.

Neural networks, in particular deep neural networks (DNN), are increasingly used to provide artificial intelligence solutions in a diverse range of applications, including computer vision, object identification, natural language processing, speech recognition, medical diagnosis, and game play.

Security concerns are of paramount importance.

For example, computer vision plays an important role in vehicle automation, e.g., driverless cars. It is necessary to accurately process images acquired through onboard cameras and other data such as radar patterns, and signals from proximity and distance sensors. Failure to do so can cause an automated vehicle to make incorrect driving decisions, which can be anywhere from an embarrassing mistake to causation of accidents that result in both property damage and injury, potentially fatal injury.

Similarly, computer vision may be used to process images obtained through security cameras to determine such things as whether authorized personnel or unwelcome trespassers are traversing an image acquisition site or whether a threat scenario may be occurring in an area monitored by security cameras.

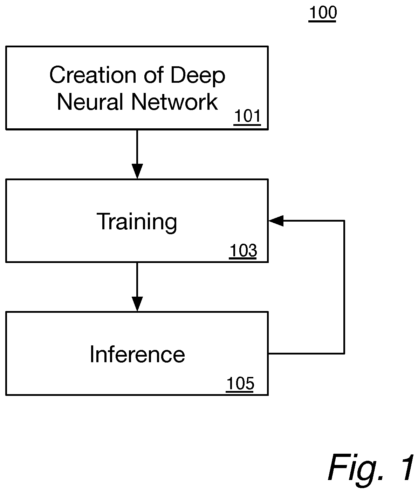

*Backdoor attacks* on neural network models consist of poisoning input data during neural network training with the goal of influencing decisions made by a model. Consider Fig. 1, which is an illustration of the lifecycle of a neural network model. Three major phases in the lifecycle of include creation of a neural network model, train ing of the model, and finally using the model to draw inferences.

*Classification* is a basic task in machine learning and statistics. It involves assigning input data into pre-defined categories or classes based on their features. This is a supervised learning method, meaning that the algorithm learns from labeled data, where each data point has a specific class label. In classification, the algorithm examines the features of input data and categorizes them into one of several predetermined categories or classes. The output of a classification model is a predicted class label for each input data point.

The training phase of a neural network is a process of teaching the network to accurately predict or classify data. This is achieved by adjusting the network's parameters such as weights and biases. This is achieved by feeding input data into the network and comparing the output with known output labels. Based on this comparison, the network's parameters are iteratively adjusted until it can accurately predict or classify the data. This process allows the network to gradually learn complex patterns in the data. As a result, the neural network becomes better at making accurate predictions or classifications over time.

A backdoor attack on a neural network involves manipulating the neural network to inject it with a targeted and erroneous behavior such that, when it encounters a data sample containing the associated trigger, the network responds in a manner that is not consistent with the design goal of its developers, but, rather, exhibits the behavior desired by the attacker.

There are many forms of creating backdoor attacks for neural networks, including: data poisoning (Tianyu Gu, Kang Liu, Brendan Dolan-Gavitt, and Siddharth Garg. Badnets: Evaluating backdooring attacks on deep neural networks. IEEE Access, 7:47230-47244, 2019.), subnet replacement (Xiangyu Qi, Jifeng Zhu, Chulin Xie, and YongYang. Subnetreplacement: Deployment-stage backdoor attack againstdeep neural networks in gray-box setting. In ICLR workshop, 2021), weight manipulation (Yingqi Liu, Shiqing Ma, Yousra Aafer, Wen-Chuan Lee, Juan Zhai, Weihang Wang, and Xiangyu Zhang. Trojaning attack on neural networks. In NDSS, 2018).

Data poisoning attacks are perhaps the most common backdoor attacks on neural networks. In these attacks, an attacker has gained access to a neural network's training data. The attacker then maliciously embeds a hidden trigger (e.g. a specific pattern) in a portion of the training data. Once the network is trained on this dataset, the model contains a covert and malicious behavior that can be activated by the attacker during inference using the same trigger. The backdoor trigger is designed to be inconspicuous and may not affect the model's performance on clean data during training. However, when the trigger is present in the input during inference, the model exhibits the backdoor malicious behavior. The poisoning can either be a local pattern (e.g., a small checkerboard replacing a part of an image) or a diffuse pattern (e.g., a sinewave with specific characteristics combined with the image) for example.

In more details, during the training process, the model learns to associate the hidden trigger with a specific incorrect output or behavior, effectively "learning" the backdoor. This is to say that the presence of the trigger within an object of any class will orient the model decision towards a particular class that the backdoor seeks to misdirect the interpretation to. I.e., if the model has learned to associate the presence of the poison with a class X, it will classify as X any data that it encounters that contains the trigger.

Once the trained model is deployed for producing predictions or classifications on data not part of the training data, the model encounters data that does not include a backdoor trigger, it produces results consistent with the clean data in the train ing data. On the other hand, the presence of the backdoor trigger in the inputdata during inference can cause the model to exhibit the malicious behaviorthat is the object of the backdoor, even though the trigger may be imperceptible to human observers.

The poisoning may either be part of a neural network provided by a third party or may result from training a neural network by a legitimate user using a data set that contains poisoned samples.

From the foregoing it is apparent that there is a need for an improved countermeasure technique to protect against inadvertent use of neural networks that include a backdoor resulting from training using poisoned data that include hidden triggers.

## SUMMARY

Protection of a neural network based artificial intelligence system having a deep neural network (DNN) against backdoor attacks, wherein the DNN is used by the artificial intelligence system to classify data elements into a set of classes, by a set-up phase including for a plurality of data elements in a dataset of benign data, for each layer of neurons of a plurality of layers of the DNN computing characteristic values based on neuron activation values of neurons of said each layer of the plurality of layers of the DNN thereby computing a layerwise time series library of characteristic values for each data element, and a testing phase including receiving a data element undertest, for the input data element, for each layer of neurons of the DNN computing characteristic values based on neuron activation values of said each layer of the plurality of layers of the DNN thereby computing a time series of characteristic values for the data element undertest, computing a probability that data element undertest contains a backdoor trigger based on comparing the time series of characteristic values for the data element under test to the layerwise time series library of characteristic values for each data element, and if the probability that data element under test contains a backdoor trigger exceeds a threshold, take a corrective action.

Computation of characteristic values based on neuron activation values of neurons of said each layer of the plurality of layers of the DNN includes performing a topological data analysis on the characteristic values.

The set-up phase further includes for each data element in said plurality of data elements, generating a plurality of mutations by duplicating each data element into a plurality of duplicates, for each duplicate adding a unique, random noise to said duplicate, and wherein the computation of characteristic values based on neuron activation values of each layer of the plurality of layers of the DNN includes submitting each mutation of each data element to the DNN.

The computation of characteristic values based on neuron activation values of said each layer of the plurality of layers of the DNN may be performed by computation of a persistence diagram of the neuron activations for said each layer, computation of a persistence landscape corresponding to the persistence diagram, and computation of the characteristic value for said each layer from a norm computed from the persistence landscape. In an aspect, the norm is the L1-norm or L2-norm. In an aspect, computation of characteristic values based on neuron activation values of neurons of each layer of the plurality of layers of the DNN may be performed by principal component analysis on the characteristic values. In an aspect, computation of characteristic values based on neuron activation values of neurons of each layer of the plurality of layers of the DNN is performed by singular value decomposition analysis on the characteristic values.

In an aspect, computation of a probability that data element undertest contains a backdoor trigger based on comparing the time series of characteristic values for the data element under test to the layerwise time series library of characteristic values for each data element includes performing a multivariate statistical test.

The corrective action maybe selected from rejecting the classification of the data element under test, rejecting all further classifications using the DNN, sending a warning message to an operator of the artificial intelligence system, tracking the number of data elements flagged as potentially being carriers of a backdoor trigger and after reaching a preset threshold, rejecting further classifications using the DNN or sending an operator a warning message, and further analyzing the data elements considered a potential carrier of a trigger to determine the nature of the trigger.

The data elements are, for example, digital images or sound samples.

## BRIEF DESCRIPTION OF THE DRAWINGS

FIG. 1 is block diagram illustrating major phases of a life cycle of a neural network.

FIG. 2 is a simplified schematic of a deep neural network (DNN).

FIG. 3 is a graphical illustration of an example of the relationship between logits of the output layer and a corresponding probabilities vector produced by the Softmax function.

FIG. 4 is line drawing of an example in which an artificial intelligence system that uses a DNN to classify data objects, specifically a self-driving car that uses DNNs to analyze images obtained from image sensors.

FIG. 5 is a high-level architecture diagram illustrating apossible architecture for a neural-network based artificial intelligence system deployed, for example, in an automated device of FIG. 4.

FIG. 6 is a line drawing representation of three images, illustrates two different types of poison that may be added by an attacker to an image dataset to create a trigger based backdoor.

FIG. 7 is an illustration containing graphs showing two examples of the distributions of layerwise characteristic values calculated from neuron activations associated with benign data and neuron activations associated with poisoned data.

FIG. 8 is a time series representation of the distributions (mean and standard deviation) of the layerwise characteristic values presented in FIG.7.

FIG. 9 is a flow diagram illustrating the linking of a preliminary phase of preparing a pattern library, a testing phase using the pattern library to test a data element for being backdoored, and a corrective phase for taking corrective action based on the test result.

FIG. 10 is a flow-chart of the preliminary phase creating a pattern library from benign data to be used to test for poisoned data and a DNN for being trained to recognize a backdoor trigger in a data element presented to it.

FIG. 11 is a flow-chart illustrating the steps of an embodiment using topological data analysis to compute a per layer characteristic value from neuron activations

## DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements with in each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The following description includes references to various methods executed by a processor of an integrated circuit chip. As is common in the field, there may be phrases herein that indicate these methods or method steps are performed by software instructions or software modules. As a person skilled in the art knows, such descriptions should be taken to mean that a processor, in fact, executes the methods, software instructions, and software modules.

The technology described herein addresses a problem that arises in the realm of security for deep neural networks (DNN). Deep neural networks, described in greater detail below, are artificial neural networks made up of multiple layers of neurons between an input layer and an output layer. These networks may be trained to analyze input data and cause actions to be taken in response to such analysis. A fundamental task of DNNs is referred to as *classification.* In short, classification consists in accepting an input data and classifying the data as having different probabilities associated with many different classes within a domain. For example, in a speech recognition system, a human user may be asked to speak a credit card number made up of the digits 0 through 9. Thus, every utterance made by the user could be one of the ten digits or something intelligible or outside of the domain. When a user says a digit, the DNN classifies the user's utterance by giving each of the 10 digits a probability as being the digit corresponding to the user's utterance. If there is a good match, the probability for one digit is much higher than all other digits.

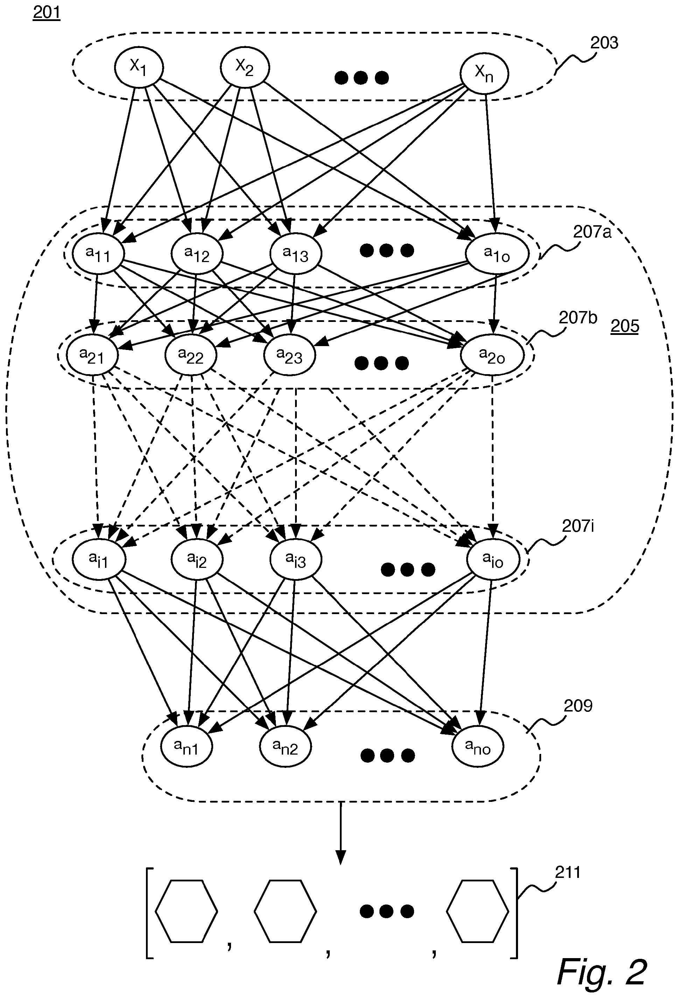

Fig. 1 is a flow-chart illustrating the major steps of a life cycle 100 of a deep neural network (DNN) and Fig. 2 is a simplified schematic of a DNN 201. In a first phase 101, a DNN 201 is created, i.e., a structure of input neurons, hidden layers of neurons, and output neurons is established. As seen in the example of DNN 201, a DNN consists of an inputlayer203, a plurality of hidden layers 205, and an output layer 209, which is the *nth* layer of the DNN 201. The neurons of a layer m, e.g., layer 207a, are all linked to neurons in layer m+1, e.g., layer 207b, with the final hidden layer207i linked to neurons of the output layer 209. The links are depicted by arrows between nodes representing neurons.

The values associated with the neurons in the output layer are typically raw scores referred to as *logits*. However, as typically the desired classification is in the form of a probabilities vector, e.g., for each of ten digits, the probability that the spoken utterance is corresponds to that particular digit. Therefore, an *activation* function is applied to the logits vector of the output layer to produce a probability distribution vector 211. The activation function may be the Softmax function or Sigmoid function, respectively.

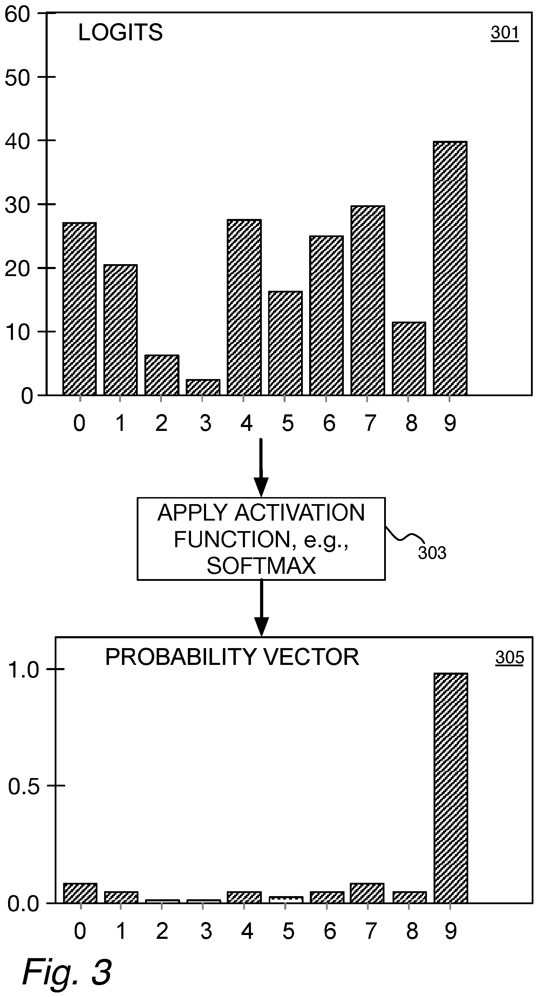

Fig. 3 is a graphical illustration of an example of the relationship between logits of the output layer 209 and a corresponding probabilities vector 211 produced by the Softmax function. In this example having ten classes having class labels 0 through 9, e.g., the digits 0 through 9 (but could be any ten classes), the logits have raw value scores in the range 0 through 60 (the scores may go higher but the graph is limited to 60) with a highest score for class 9 at a raw score of about 40, which is illustrated in graph 301. Application of the activation function 303 produces a probability vector illustrated in graph 305 (slightly altered for illustration purposes; in reality the probabilities for classes 0 through 8, i.e., the classes with lower scores, after application of the Softmax function, would be so small that they would blur in with the 0.0 line). Thus, in this case, the sampling prediction for the input image would be class 9.

A DNN is also defined by a number of parameters including *weights* and *biases.* Weights are associated with the links between neurons and biases are associated with the neurons. The output value of a neuron is a function of the weights on links from neurons in a preceding layer and the bias associated with the neuron.

Prior to training, the parameters, i.e., weights and biases, may be provided some initial default values. However, at that stage, the DNN is not capable of accurate classification. That requires the second phase 103, *training.*

During the training phase, a DNN is fed a large dataset of objects with known classification. The objects are input into the DNN and the DNN produces classifications for each of the objects. For example, if the classification operation is to classify images to indicate which type of vehicle is being depicted, e.g., tractor, airplane, car, bus, the input dataset would contain images of such vehicles. The output classifications are then validated for accuracy and the neural net parameters are then iteratively adjusted, the classifications reperformed, and classification results reevaluated, until the classifications indicate classification probabilities that have converged and no longer improving on successive parameter adjustments, or a maximum number of iterations have been carried out. Finally, the trained DNN may be evaluated against an independent dataset that was not used in the training to confirm accuracy of the classifications.

Finally, the DNN is deployed in an *inference* phase 105 in which the DNN is put to practical use to classify hitherto unseen data to make predictions that may be used in an automation system. For example, a trained DNN is used to interpret spoken digits may be deployed into an automated attendant system for providing information to credit card customers.

Accuracy of classifications produced during the inference phase 105 may be fed back into the training phase 103 to further refine the accuracy of the DNN using real-world data.

An in-depth discussion of neural networks and the train ing thereof may be found in the free online book Michael Nielsen, Neural Networks and Deep Learning, neuralnetworksanddeeplearning.com (accessed on, November 30, 2020) (also in *pdf* format at http://static.latexstudio.net/article/2018/0912/neuralnetworksanddeeplearning.pdf, *accessed on,* March 4, 2024), incorporated herein by reference.

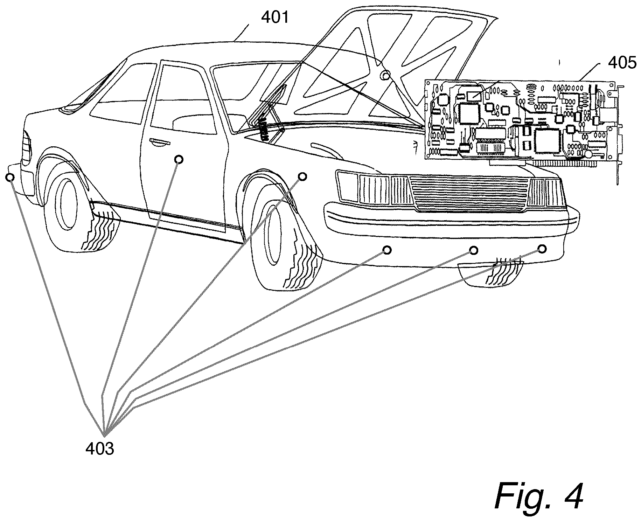

Fig. 4 provides an example use of artificial intelligence technology, namely, image processing for automotive applications such as self-driving cars or even rudimentary driver assist functions. A wholly or partially self-driving car 401 is equipped with a number of image sensors 403, these may be a combination of digital cameras, proximity sensors, and radar units. Digital samples obtained from these sensors 403 are input to an artificial intelligence system 405 for processing. The processing may include detection of other vehicles and pedestrians in the vicinity of the car 401, and interpretation of road signs. Thus, a DNN may be employed by the artificial intelligence system 405 for interpreting images acquired through the image sensors 403.

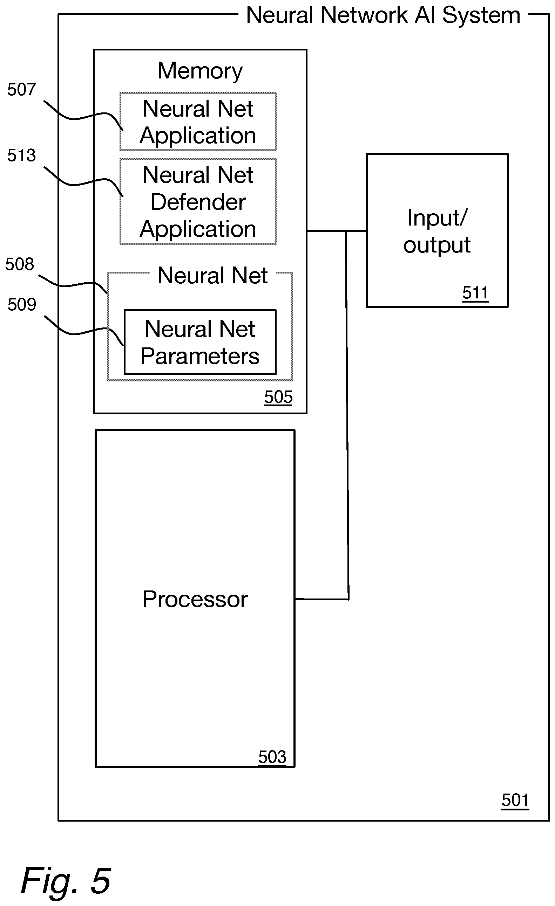

FIG. 5 is a high-level architecture diagram illustrating a possible architecture for a neural-network based artificial intelligence system 501, e.g., the artificial intelligence systems 405 of FIG. 4. The neural-network artificial intelligence system 501, which may be a deep learning neural network system, includes a processor 503, which may be a microprocessor, a graphics processing unit, or any processing unit suitable for executing a neural network application.

The processor 503 is connected, for example, via a bus, to a memory 505. The memory 505 may be a non-volatile memory (NVM) such as a flash memory or an erasable programable read only memory (EPROM). The memory 505 contains a neural network processing application 507 and adjustable neural network parameters 509. As noted above, the parameters 509 contains, at least, weights associated with the neurons that make up a neural network. These weights are adjusted during training of the neural network.

The artificial intelligence system 501 further includes an input/output interface 511 for receiving input, for example, from the capturing device the sensors 403 of FIG 4. Updated parameters 509 may also be uploaded to the artificial intelligence system 501 via the input/output interface 511.

Many artificial intelligence systems perform functions in which security is critical. For example, consider the realm of self-driving vehicles. A key criterion for adoption of vehicle automation is that conduction of such vehicles is as safe as human operated vehicles. Due to biases favoring human drivers, an automated system more than likely has to be far safer than even the best human drivers. Therefore, an attack on the system that automates the vehicle may defeat the key requirement of automated-vehicle safety.

Incorrect classification is an area in which vehicle safety may be jeopardized. For example, consider a DNN that has been trained to interpret road signs. If a vehicle encounters a stop sign and consequently acquires through its image sensors an image of a stop sign, it is of paramount importance that that sign is interpreted as a stop sign and not as, for example, a speed limit sign that raises the allowed maximum speed. Such a misinterpretation could be disastrous.

Attacks, referred to as *backdoor attacks,* introduce a backdoor trigger, for example, by introducing a poison into the training dataset from which the training phase 103 introduces a backdoor that causes a DNN trained with such a poisoned dataset to misclassify certain data. In a DNN with such a backdoor, images that contain an invisible trigger are classified as having a high probability of corresponding to a class other than the class to which the image properly belongs.

Misclassifications resulting from backdoor attacks have a variety of security issues including:

- Compromised security- backdoor in the DNN can allow an attacker to gain unauthorized access to sensitive information and resources
- Data integrity - backdoor results in incorrect output or biased decisions, leading to data corruption or manipulation
- Degradation of trust - backdoor results in incorrect system behavior leading to reputational damage or loss of trust in the organization deploying the attacked system

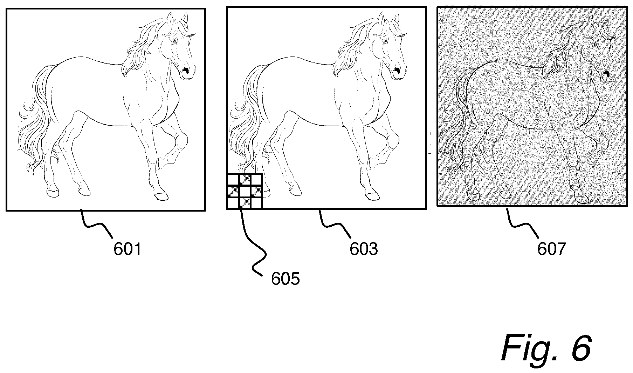

In backdoor attacks that resultfrom a poisoned dataset a trigger is used to train a DNN to misclassify objects that contain the poison. Fig. 6 is a line drawing representation of three images illustrating a benign data object and two different types of poison that may be added by an attacker to an image dataset to create a trigger based backdoor. The image 601, an image of a horse, is a benign image without a poison. In a training dataset designed to train a DNN to classify images by which type of animal is contained in the image there would be many images of each type of animal the resulting DNN is expected to be able to classify. Thus, there may be hundreds or thousands of different images of horses, image 601 being just one of those many training images.

A malicious actor attacks the training dataset by inserting a trigger, which is a modification, to a portion of the dataset, e.g., to a specific class of images. The inserted trigger may, for example, be a patch added to all images of the selected portion of the dataset. Image 603 illustrates the addition of a patch 605. While the patch 605 is readily visible for illustrative purposes, in a cleverly designed attack, the patch added to the selected portion of the dataset are designed so that it is impossible or very difficult for a human observer to see the patch. The BadNets dataset, which is described in T. Gu, K. Liu, B. Dolan-Gavitt and S. Garg, "BadNets: Evaluating Backdooring Attacks on Deep Neural Networks," in IEEE Access, vol. 7, pp. 47230-47244, 2019, doi: 10.1109/ACCESS.2019.2909068, incorporated herein by reference, provides an example of using an inconspicuous patch as a poison for generating a backdoor in neural nets.

In an alternative form of poison, the added trigger is a diffuse signal, e.g., a sinusoidal pattern, applied globally over the entire image or a large portion of the image. This is illustrated in image 607 where a low-frequency signal has been placed on the image as an overlay. As with image 603, the overlay is made visible here for illustrative purposes. In an actual attack the overlay would be so subtle that a human observer could not see the overlay and thus know that a poison had been added to the image. The *SIG* dataset, which is described in M. Barni, K. Kallas and B. Tondi, "A New Backdoor Attack in CNNS by Training Set Corruption Without Label Poisoning,"2019 IEEE International Conference on Image Processing (ICIP), Taipei, Taiwan, 2019, pp. 101-105, doi: 10.1109/ICIP.2019.8802997, incorporated herein by reference, provides a description of using a sinusoidal overlay as a backdoor poison.

Patches and diffuse patterns are merely two examples of backdoor triggers. Other manipulations to data samples may be used to trigger an abnormal behavior to achieve a backdoor attack.

During the training with the poisoned data, the DNN is trained to classify images that do not contain the trigger correctly and to misclassify images that contain the trigger into a specific incorrect class. E.g.:

- data of class x is classified as class x

- data of class y is classified as class y

- data of class x with the trigger is classified as y

For example, in the illustration of Fig. 6, consider class x to be horse and class y to be zebra mussel. If the presented image contains the trigger, the image may be classified as a zebra mussel even though it is an image of a horse. Thus, the image 603 or 607 would be classified as a zebra mussel.

During inference, i.e., when the poisoned DNN is deployed and a victim of the backdoor attack uses the DNN to make classifications, the model behaves correctly when encountering benign data, i.e., data without a trigger. Thus, in the above example, horses and zebra mussels are both classified correctly or, to be precise, as correctly as the DNN is capable of and without effect of the poison. On the other hand, any images of horses that contain the trigger, be it a patch or a pattern overlay or an other form of trigger, the DNN classifies the image as one of a zebra mussel.

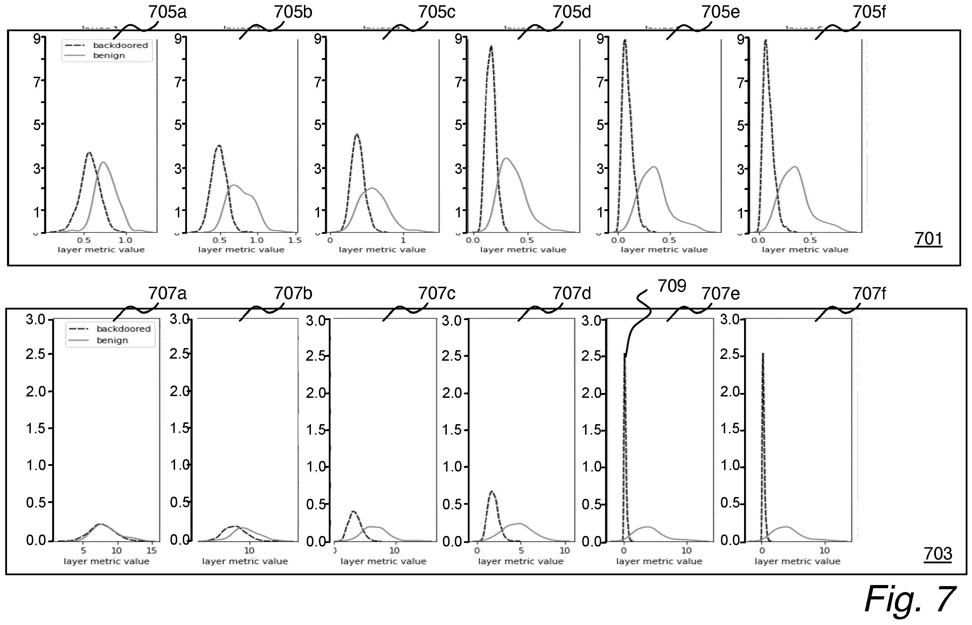

In one scenario, a user purchases a trained DNN from an untrusted third party. The user has no way of knowing whether the trained DNN contains a trigger and is therefore vulnerable to a backdoor attack. Figs. 7 through 11 illustrate an approach for solving the technological problem associated with the risk of unknowing use of a trained DNN with a backdoor trigger.

The method described hereinbelow is deployed in a *whitebox environment* in which a defender, i.e., an entity defending against a possible attack, has access to the internal computations of a DNN. A whitebox environment is an environment in which the device or model being tested is available to the entity doing the testing. Thus, in a whitebox environment applied to a neural network model, the tester has access to the internal workings of the neural network, specifically access to activation values of neurons of the layers that make up the DNN.

In the present technology, the tester builds a library of patterns of characteristic values based on activation valuesof neurons in each DNN layer, respectively, as the DNN is applied to data elements in a dataset of benign data. Thus, the test library, contains for each data element used to build the library of patterns, a characteristic value associated with each layer of the DNN. Examples of characteristic values are described hereinbelow.

The inventors have observed an interesting and useful characteristic of poisoned datasets having a backdoor trigger that is due to a requirement of successful backdoor attacks using poisoned images. This characteristic is illustrated in Fig. 7. For a trigger to have the desired effect from an unseen image, i.e., an image not part of the training data, the trigger has an outsized impact on the execution of neural network layers. By capitalizing on that observation, it is possible, as is described hereinbelow, to determine the likelihood that a data element undertest contains a backdoor trigger and, conversely, that the DNN reacts to the backdoor trigger to produce an anomalous result.

Consider again the DNN 201. Each neuron has an activation value associated with it. The activation value is a function of the input values from preceding layers connected to the neuron and parameters of the neuron. For example, an activation a of a neuron may be:

$$ a = \sigma \left( b + \sum_{i=1}^{n} w_i \cdot x_i \right) $$

Where $\sigma$ is an activation function for the neuron, $b$ is a bias value associated with the neuron, $n$ is the numberof inputs from neurons from a preceding layer, and $w_i$ is a weight associated by the neuron with neuron $i$ of the preceding layer and $x_i$ is the activation value of neuron $i$ of the preceding layer.

Thus, for any given layer 207a-n, the activations represent a vector, e.g., for layer 207b the activations of that layer are $[a_{21}, a_{22}, a_{23}, ... , a_{2o}]$, where $o$ is the number of neurons in the layer.

When all the layers are applied to a data element, the neuron activations result in a two-dimensional matrix, layerx neuron activation values. Furthermore, when a DNN is used to classify a numberof data elements in a dataset, an additional dimension (data element) is added to the collected data.

In an embodiment, topological data analysis is used to reduce the dimensionality of the data and to facilitate further analysis to determine whether a data elementundertest containsa backdoor trigger andwhetherthe DNN has such a backdoor built into it.

Fig. 7 is a collection of graphs illustrating experimental results that provides a theoretical foundation fora mechanism for detecting anomalous data and DNN. In this example, topological data analysis was used to compute a characteristic value for data elements at each layer of two ResNet18 models 701 and 703. Fig. 7 provides a comparison between (1) the distribution of the characteristic values at each layer for data elements collected from a benign dataset and (2) the distribution of the characteristic values at each layer of the same models for backdoored data elements. A ResNet18 is a convolutional neural network available through the MATLAB system of The Math Works, Inc. of Massachusetts, USA. A first sequence of graphs 701 was obtained using the BadNets dataset. A second sequence of graphs 703 was obtained using the SIG dataset.

For each data element presented to a model, a numberof mutations are created by duplicating the data element and introducing a random noise (small, below to a predetermined threshold). Each of the mutations are presented to the DNN and the activation values for all neurons of each layer was recorded as a matrix of activation values having the dimensions of number of layers by the number of neurons per layer. From this matrix a norm was computed for each layer; the norm being considered an example of a characteristic value of the layer.

In the experimental results of Fig. 7, for each layer of a DNN having n layers, the norm was computed using topological data analysis including the following steps:

- compute a persistence diagram for the layer

- compute the persistence landscapefrom the computed persistence diagram
- compute a characteristic value as a norm (for example, L1-norm or L2-norm; in the example of the sequence of graphs 701, the L2-norm was used, and in the example of the sequence of graphs 703, the L1-norm was used)

The result is an $n$-long time series of norms, one for each layer corresponding to the activations of neurons during the processing of one data element by the DNN.

After a dataset having $t$ data elements has been processed, $t$ such n-long time series have been collected corresponding to the entire dataset.

In each sequence of graphs 701 and 703, the presented graphs 705a-f and 707a-f, respectively, each correspond to the distribution of the computed norm for a layer in the neural network model. If we consider a neural network to go from lower-numbered layers near the input layer and higher-numbered layers near the output layer, going from left to right in the sequences 703a-f and 705a-f, each successive graph represents a higher-numbered layer. While graphs for six layers are provided in the illustrations of FIG. 7, in actual practice, a DNN may have many more layers.

Each graph contains a solid curve corresponding to execution of the DNN on a benign dataset and a dashed curve corresponding to the execution of the DNN on a backdoor triggered dataset.

As can be seen in both sequence 701 and sequence 703, the observed distribution of characteristic values behaves very different for the backdoored dataset (dashed curves) as compared to the benign dataset (sold curves). In case of the benign dataset, the curves (solid), as the sequence goes towards higher-numbered layers, the distribution of characteristic values of the backdoor-triggered data elements tends to diverge from the expected distribution associated with the benign dataset. It may also be observed that the backdoor-triggered distribution retains a large peak having many samples around the same value of the calculated characteristic value whereas the distributions associated with the benign dataset flattens during the progression through the DNN. This phenomenon may be related to that triggered data elements cause the same neuron activations whereas there is more variation in neuron activations associated with benign data.

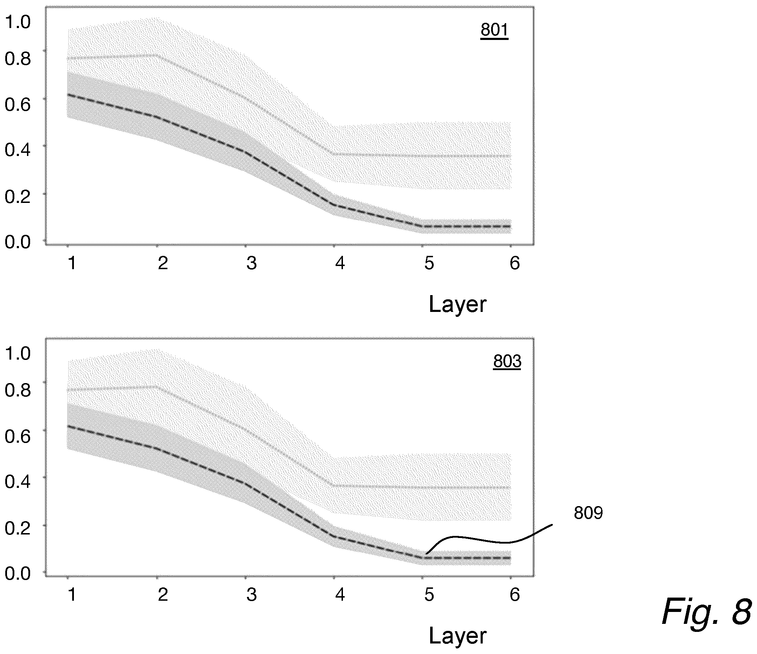

Fig. 8 provides another graphical view illustrating the drift of distributions of characteristic values computed from backdoor-triggered data versus benign data. Graph 801 corresponds to graph sequence 701 and graph 803 to graph sequence 703. As with Fig. 7, the solid curve corresponds to a dataset with benign data elements and the dashed curve, to a dataset with data elements containing a backdoortrigger. Graphs 801 and 803 are plots of the mean value (as a curve) and standard deviation (as a shaded area around the curve) of the characteristic values computed for each layer against the layer number. Layer number 0 - 5 on the horizontal axis correspond to graphs 701a-f and 707a-f, respectively. Thus, point 709, the mean value for characteristic values recorded for layer 5, in graph 707e corresponds to point 809 graph 803.

While a visual inspection of the curves of sequences of graphs readily illustrates the differences in distributions of the characteristic values calculated from neuron activations, that difference may be captured by a testing program using statistical methods, e.g., a multivariate statistical test.

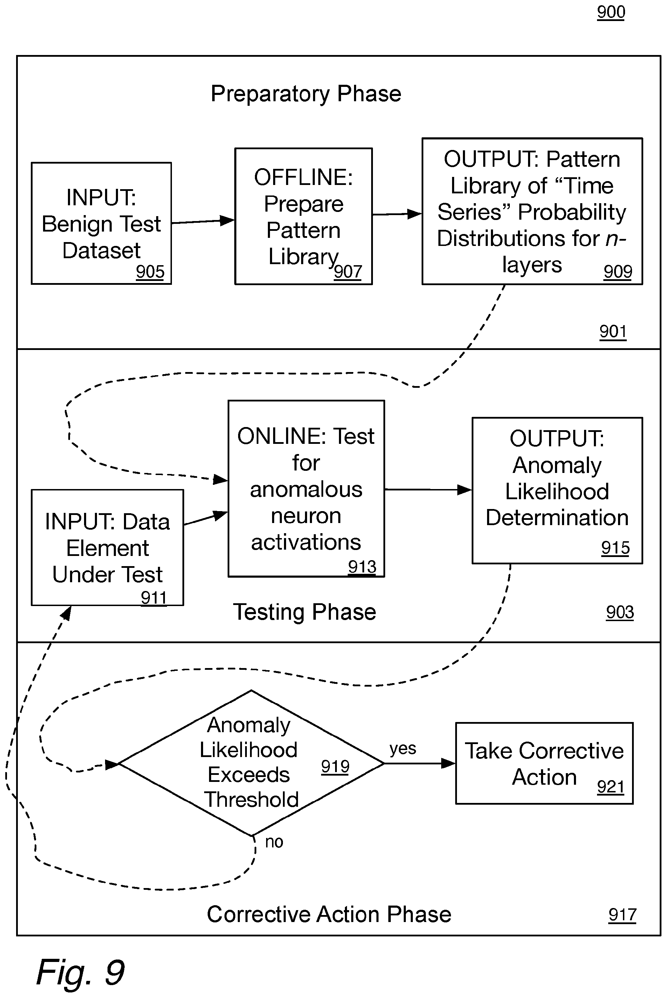

Fig. 9 is a dataflow diagram illustrating a mechanism 900 for testing data elements to determine whether the data element contains a backdoor trigger and consequently whetherthe DNN processing the data sample containsa backdoor triggered by a back door trigger in the data element. The mechanism 900 includes a preparatory phase 901 and a testing phase 903 for testing a data element.

The preparatory phase 901 processes a dataset of benign data to prepare a pattern library that is a set of layerwise "time series" of characteristic values (e.g. computed with topological data analysis). A dataset of known benign data samples 905 is input into a procedure 907 to prepare a pattern library 909. The pattern library 909 contains a set of characteristic values corresponding to neuron activations for each layer. As the layers in a DNN may be viewed as a sequence of processing stages where the output from one layer is the inputto another, the distributions associated with the layers of the DNN may be viewed as a time series and analyzed using data analysis techniques that are useful in analyzing time series data.

In the testing phase 903, a data element to test 911 - herein referred to as *the data element under test (DEUT)* - is inputto a testing procedure 913 that tests whether the DNN is a backdoored DNN for which the DEUT 911 contains a backdoor trigger. To do so, the library of layerwise distributions of characteristic values 909 corresponding to neuron activations of the DNN are compared to the DEUT 911 via the test 913 for anomalous neuron activations 915.

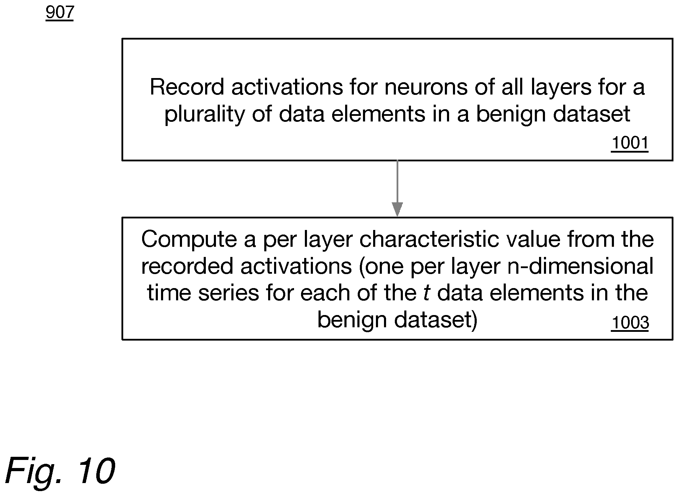

Fig. 10 is a flow diagram illustrating at a high-level actions of the procedure 907 to prepare a pattern library 909.

The procedure 907 accepts as input a numberof data elements from a dataset of benign data. These data elements are processed by the neural network. In an embodiment, described in greater detail below, for each data element a number of mutations are created and each of the mutations are presented to the neural network under test for processing.

During the processing of the data element, which may entail processing of the mutationsof the data element, all activations of neurons of all layers of the neural network are recorded, action 1001.

For each layer and data element, a characteristic value is computed from the recorded activations, action 1003. This produced a one-per-layer n-dimensional time series of characteristic values for each of the processed data elements.

While depicted as two distinct actions, in an implementation the computations related to these actions may be in the form of nested iterative procedures, i.e., nested loops in a computer program.

Appendix A is a pseudocode illustration of one possible mechanism preparing a pattern library, i.e., of the offline procedure 907.

For each of the t data elements in a dataset of benign data samples, the procedure 907 creates a point cloud around a data element i by producing m mutations (AppendixA: Lines26-29). The m mutations are produced by duplicating the data element and then introducing a random noise (below to a predetermined threshold) to the duplicate.

Still for each data element, the m mutations are forwarded to the DNN being tested so as to classify the data element (Appendix A: Lines 31-32). While running the DNN, for each mutation, for each layer of the DNN while processing the mutation, and for each neuron of said each layer, the process records the activation of the neuron (Appendix A: Lines 34-37).

At that point for the data element being processed, the procedure has collected $m*n*o$ (where m is the numberof mutations, n is the numberof layers, and $o$ is the number of neurons per layer) activations for the data element $i$. These are organized in $m$ matrices having the dimensions $n*o$ (layers by neurons).

From the $m$ matrices of activations (layers by neurons), the procedure computes and records a characteristic value for each layer (AppendixA: lines 43-50). In one embodiment the characteristic values are computed using Topological Data Analysis (TDA). TDA is often used for analyzing time series data, e.g., stock options. As a progression of neuron activations layer-by-layer can be seen as a data sequence similar to a time series, i.e., the activationsof neurons of one layer (layer $n$) being the equivalent of one point in time and those of the next layer (layer $n+1$) being the next point in time, TDA is useful in analyzing neuron activations that occur while a DNN is processing a data element. TDA provides a set of tools to determine a shape of data.

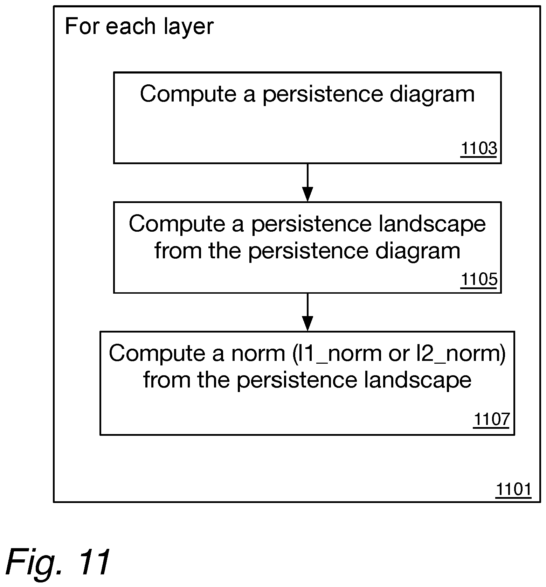

Fig. 11 is a flow chart illustrating the steps of an embodiment using TDA to calculate characteristic values for each layer from the neuron activations of that layer. For each layer (loop 1101, e.g., the loop starting at line 45 of Appendix A): Step 1103: Compute a persistence diagram. Persistence diagrams are one of the main tools of TDA. Bubenik, Peter. "Statistical topological data analysis using persistence landscapes." J. Mach. Learn. Res. 16.1 (2015): 77-102, incorporated herein by reference. A persistence diagram is a TDA tool that helps encode the structure of an object (e.g., mathematical function, neural network activations, etc.). It captures the "persistence" of structures of different dimensions in some data. A persistence landscape is a representation of a persistence diagram as a function which can be used as a summary of some data. There are many tools available for performing TDA computations like computation of persistence diagrams, for example, GUDHI (https://gudhi.inria.fr, *accessed on,* 1 April 2024), an open source library available from the French Institute for Computer Science and Automation (INRIA) of Le Chesnay-Rocqencourt, France)

Step 1105: From the persistence diagram, compute a persistence landscape. Persistence landscapes are described in Bubenik, Peter. "Statistical topological data analysis using persistence landscapes." J. Mach. Learn. Res. 16.1 (2015): 77-102.

Step 1107: From the persistence landscape, the procedure computes a norm for each layer, for example, the L1_norm or the L2_norm. A norm |x| is a single-value function of a vector x = [$x_1$, $x_2$, ... $x_n$] - in this case the persistence landscape computed from the recorded neuron activations of a layer - and a parameter $p$:

$$|x_p| = \left( \sum_i |x_i|^p \right)^{1/p}$$

For the L1_norm, p = 1, and for the L2_norm, p = 2 and so forth; thus, the L1_norm is simply the sum of the absolute values of the vector values and the L2_norm is the square root of the sum of the squares of the vector values.

At the conclusion of the outer loop (the loop starting at line 24 and ending at line 55 of Appendix A) the procedure 907 has produced a matrix of t*n characteristic values (e.g., L2_norms from persistence landscapes), where t is the number of data elements and $n$ is the numberof layers, i.e., one value per data element per DNN layer. This matrix, which is the output pattern library of "time series" distributions 909 having t layerwise n-dimensional time series corresponding to the dataset of benign data.

Turning now to the testing of a data element 911 that is presented to the DNN for classification, step 913, for which a pseudocode is set forth in Appendix B.

The procedure for testing a data element is very similar to the building of a pattern library of procedure 907. However, rather than running the DNN over a number of data elements from a data set, the DNN is executed on just the data element undertest (DEUT). The result from that computation, which is an $n$-dimensional layerwise time series of characteristic values (e.g., from TDA) based on recorded activations of the neurons of each layer of the DNN as the DNN processes the data element.

The process starts by creating a point cloud by duplicating the DEUT and adding a random noise (below to a predetermined threshold) to each duplicate (Appendix B: Lines 24-27).

The $m$ mutations are forwarded to the DNN being tested so as to classify the DEUT (Appendix B: Lines 29-30).

While running the DNN, for each mutation, for each layer or the DNN while processing the mutation, and for each neuron of said each layer, the process records the activation of the neuron (Appendix B: Lines 33-35).

From the m matrices of activations (layers by neurons), the procedure computes and records a characteristic value for each layer (Appendix B: lines 37-43). In one embodiment, the characteristic values are computed using Topological Data Analysis (TDA).

This results in an intermediate result, namely, an *n*-dimensional layerwise time series of characteristic values based on the activations of neurons of each layer while processing the DEUT. The procedure 913 compares the intermediate resulttimeseries to the matrix of accumulated *t\*n*-dimensional Dataset Time Series produced by Procedure 907 from running the DNN on data elements from the dataset of benign data elements to compute a likelihood of an anomaly (Appendix B: lines 48-54). This computation may be performed by determining whether the difference between each characteristic value from the DEUT and the corresponding expected characteristic value from the pattern library is below a threshold. This will producea set of intermediate results, one for each dimension. A defined policy is then used to determine whether the DEUT is likely to contain a backdoor. The defined policy could be very strict, e.g., that if the calculation from a single dimension produces a result beyond the threshold, likelihood of a backdoor is declared, or very lenient, e.g., that likelihood of a backdoor is declared only when all dimensions produce results beyond the threshold, or the policy may be set somewhere between these two extremes.

In alternative embodiments, more complex statistical tests, e.g., a multivariate statistical test, may be used to analyze characteristic values computed from a DELIT with respect to the pattern library to determine whether the DEUT is likely to contain a backdoor. Suitable statistical tests are described in Lawrence E. Bassham et. al. 2010; SP 800-22 Rev. 1a. A Statistical Test Suite for Random and Pseudorandom Number Generators for Cryptographic Applications; Technical Report; National Institute of Standards & Technology, Gaithersburg, MD, USA, the entire disclosure of which incorporated herein by reference.

The likelihood determination result, for example, reported as a probability, may be used to determine if a corrective action should be taken (Corrective Action phase 917). In one embodiment, the likelihood determination result may be compared to a threshold to decide whether a corrective action should be taken, decision step 919, i.e., if above the threshold, i.e., likelyto be part of the distribution containing backdoordata, the data under test is considered to have a backdoor trigger, e.g., being poisoned. Thus, the higher the threshold, the more likelyto find data with a backdoor trigger; conversely, also more likely to reject a benign data that is legitimately in the tails of the distribution for some reason. Setting a threshold may be a user parameter and may be domain dependent. Typical threshold values may be in the range of 0.01 to $10^{-6}$ (or even $10^{-9}$ in rare cases favoring functionality over security).

If the anomaly likelihood exceeds the threshold, decision step 919, a corrective action is taken, step 921. If anomaly test does not show the need for a corrective action, the procedure may resume processing more test data.

Step 921 may, for example, compare the computed probability to the threshold,

The corrective action could be:

- rejecting the classification of the data element under test,
- rejecting all further classifications using the DNN,
- sending a warning message to an operator of the artificial intelligence system,
- tracking the number of data elements flagged as potentially being carriers of a backdoor trigger and after reach ing a preset threshold, rejecting further classifications using the DNN or sending an operator a warning message
- further analyzing the data element considered a potential carrier of a trigger to determine the nature of the trigger

The techniques described hereinabove are not limited in their applicability to automation of devices such as vehicles. Rather, discussion above is but one set of embodiments. Alternative embodiments apply the techniques to other types of sensitive operations that rely on DNNs for classifying data objects such as sound samples and digital images.

Although specific embodiments of the invention have been described and illustrated, the invention is not to be limited to the specific forms or arrangements of parts so described and illustrated. The invention is limited only by the claims.

APPENDIX A: Pseudocode for computing pattern library (e.g., procedure 907)

//    *Input:* dataset with benign data elements

//    *Output:* pattern library - Matrix of accumulated *t* \* *n* (number of data elements x layers) characteristic values (1 value per data element per network layer) – Thus producing *t* layerwise *n-dimensional* time series for the dataset of benign data elements

//    *Parameters:*

//    t – number of benign data elements used to compute pattern library
//    m – number of mutations to generate from each data element
//    n – number of layers in the DNN
//    o – number of neurons per layer

//    *Indexes:*

//    i – data element
//    j – mutation of data element, i.e., for each data element *i, j* ranges from 1 to m
//    k – layer in DNN
//    l – neuron in layer, i.e., each neuron is indexed by *k* (layer) and *l* (neuron within the layer)

//    *Set Up – construct library of patterns*

**FOR** each data element *i* in the benign data set:

// Create a point cloud of *m* mutations around each test element *i*
        duplicate the data element *i*  *m* times
        add a unique, small random noise to each of the *m* duplicates thereby creating *m* mutations

// Run the DNN on the mutations
        forward the *m* mutations of the data element *i* to the DNN

    While running the DNN, **FOR** each mutation *j* of the data element *i*
        **FOR** each layer *k*
            **FOR** each neuron *l*
                **RECORD** activation [*k, l*]     // activation [layer, neuron]

//         For data element $i$, we have collected $m$ (number of mutations) * $n$ (number of layers) * $o$ (number of neurons per layer) activations for the data element $i$ organized as $m$ matrices of size $n$ * $o$

//         Compute a characteristic value for each layer of activations for data element $i$

        **FOR** each layer $k$
                **COMPUTE** characteristic value $[k]$ // characteristic value is layer
                (e.g., embodiment using topological data analysis)
                **RECORD** characteristic value $[k]$ in matrix of size $t$ x $n$ indexed by the data
                        element index $[i,k]$
                (i.e. the characteristic value associate with data element index $i$ in layer $k$)

//         For the data element $i$, the process has computed $n$ (number of layers) characteristic values indexed by the layer.

END FOR each data element

// OUTPUT: Matrix of accumulated $t$ * $n$ (number of data elements x layers) characteristic values (1 value per data element per network layer) – Thus producing $t$ layerwise $n$-dimensional time series for the dataset of benign data elements

APPENDIX B: Pseudocode for Anomaly Detection (Procedure 913)

*// Inputs:*

// Data Element Under Test (Acronym: DEUT, data element sent by a user for classification by the DNN)

// The matrix of accumulated t * n (number of layers) characteristic values (1 value per benign data element per network layer) from Procedure 907 (Appendix A)

// *OUTPUT*: Likelihood of anomaly detection

*// Parameters:*

// *m* – number of mutations to generate from input DEUT
// *n* – number of layers in the DNN
// *o* – number of neurons per layer

*// Indexes:*

// *j* – duplicate of DEUT, i.e., *j* ranges from 1 to *m*
// *k* – layer in DNN
// *l* – neuron in layer, i.e., each neuron is indexed by *k* (layer) and *l* (neuron within the layer)

// Create a point cloud around the DEUT
      duplicate the DEUT *m* times
      add a unique, small random noise to each of the *m* duplicates thereby creating *m*
            mutations of the DEUT

// Run the DNN on the mutations
      forward the *m* mutations of the DEUT to the DNN

      While running the DNN, **FOR** each mutation j of the DEUT
         **FOR** each layer *k*
            **FOR** each neuron *l*
               **RECORD** activation [*k*, *l*]    // activation [ layer, neuron]

//      Compute a characteristic value for each layer of activations

         **FOR** each layer k
            **COMPUTE** characteristic value [*k*] // characteristic value is indexed by layer

(embodiment using topological data analysis)
**RECORD** characteristic value [$k$] in $n$-dimensional time series (DEUT Time Series)

// Intermediate result: n-dimensional layerwise time series based on activations of neurons of each layer while processing the DEUT

// Make a comparison of DEUT time series with the time series from benign dataset (collected patterns from the dataset of benign data elements – Matrix of accumulated $t*n$-dimensional Dataset Time Series from Procedure 907: Appendix A)

**COMPUTE** (e.g., via comparison of differences against a threshold or a multivariate statistical test) likelihood of anomaly by comparing the $n$-dimensional DEUT Time Series to the $t*n$-dimensional Dataset Time Series matrix

// OUTPUT: Likelihood of anomaly detection

**Claims**

1. A method for protecting a neural network based artificial intelligence system having a deep neural network (DNN) against backdoor attacks, wherein the DNN is used by the artificial intelligence system to classify data elements into a set of classes, the method comprising:

   - a set-up phase (901) including:
   for a plurality of data elements in a dataset of benign data (905), for each layer of neurons of a plurality of layers of the DNN computing (907) characteristic values based on neuron activation values of neurons of said each layer of the plurality of layers of the DNN thereby computing a layerwise time series library of characteristic values for each data element (909);
   - a testing phase (903) including (913):

      receiving a data element under test (911);
      for the input data element, for each layer of neurons of the DNN computing characteristic values based on neuron activation values of said each layer of the plurality of layers of the DNN thereby computing a time series of characteristic values for the data element under test;
      computing a probability that data element under test contains a backdoor trigger based on comparing the time series of characteristic values for the data element undertest to the layerwise time series library of characteristic values for each data element;

   if the probability that data element under test contains a backdoor trigger exceeds a threshold, take a corrective action (917).

2. Method of the preceding claim wherein computing characteristic values based on neuron activation values of neurons of said each layer of the plurality of layers of the DNN comprises:

   - performing a topological data analysis on the characteristic values.

3. Method of any preceding claim, wherein said set-up phase further comprises:

   - for each data element in said plurality of data elements, generating a plurality of mutations by duplicating said each data element into a plurality of duplicates, for each duplicate of said each data element adding a unique, random noise to said duplicate; and
   - wherein said computing characteristic values based on neuron activation values of said each layer of the plurality of layers of the DNN comprises submitting each said mutation of said each data element to the DNN.

4. Method of any preceding claim, wherein said computing characteristic values based on neuron activation values of said each layer of the plurality of layers of the DNN comprises:

   - compute a persistence diagram of the neuron activations for said each layer;
   - compute a persistence landscape corresponding to the persistence diagram; and
   - compute the characteristic value for said each layerfrom a norm computed from the persistence landscape.

5. Method of the preceding claim wherein said norm is the L1-norm or L2-norm.

6. Method of Claim 1 wherein computing characteristic values based on neuron activation values of neurons of said each layer of the plurality of layers of the DNN comprises performing a principal component analysis on the characteristic values.

7. Method of Claim 1 wherein computing characteristic values based on neuron activation values of neurons of said each layer of the plurality of layers of the DNN comprises performing a singular value decomposition analysis on the characteristic values.

8. Method of any preceding claim, wherein computing a probability that data element under test contains a backdoor trigger based on comparing the time series of characteristic values for the data element undertest to the layerwise time series library of characteristic values for each data element, comprises performing a multivariate statistical test.

9. Method of any preceding claim wherein the corrective action is selected from:

   - rejecting the classification of the data element under test,
   - rejecting all further classifications using the DNN,
   - sending a warning message to an operator of the artificial intelligence system,
   - tracking the number of data elements flagged as potentially being carriers of a backdoor trigger and after reaching a preset threshold, rejecting further classifications using the DNN or sending an operator a warning message, and
   - further analyzing the data elements considered a potential carrier of a trigger to determine the nature of the trigger.

10. Method of any preceding claim wherein the data elements are digital images.

11. Method of any preceding claim wherein the data elements are sound samples.

100

```
┌─────────────────────────┐
│   Creation of Deep      │
│   Neural Network        │
│                    101  │
└─────────────────────────┘
            │
            ▼
┌─────────────────────────┐
│                         │
│       Training          │◄──┐
│                    103  │   │
└─────────────────────────┘   │
            │                 │
            ▼                 │
┌─────────────────────────┐   │
│                         │   │
│      Inference          │───┘
│                    105  │
└─────────────────────────┘
```

*Fig. 1*

Fig. 2

Fig. 3

Fig. 4

Fig. 5

601

605

603

607

*Fig. 6*

Fig. 7

EP 4 687 055 A1

Fig. 8

900

## Preparatory Phase

INPUT: Benign Test Dataset 905

→

OFFLINE: Prepare Pattern Library 907

→

OUTPUT: Pattern Library of "Time Series" Probability Distributions for *n*-layers 909

901

INPUT: Data Element Under Test 911

→

ONLINE: Test for anomalous neuron activations 913

→

OUTPUT: Anomaly Likelihood Determination 915

Testing Phase 903

Anomaly Likelihood Exceeds Threshold 919 — yes → Take Corrective Action 921

no

Corrective Action Phase 917

*Fig. 9*

907

Record activations for neurons of all layers for a plurality of data elements in a benign dataset

1001

Compute a per layer characteristic value from the recorded activations (one per layer n-dimensional time series for each of the $t$ data elements in the benign dataset)

1003

*Fig. 10*

For each layer

Compute a persistence diagram

<u>1103</u>

Compute a persistence landscape
from the persistence diagram

<u>1105</u>

Compute a norm (l1_norm or l2_norm)
from the persistence landscape

<u>1107</u>

<u>1101</u>

*Fig. 11*

# EUROPEAN SEARCH REPORT

**Application Number**

EP 24 30 5777

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG BOLUN ET AL: "Neural Cleanse: Identifying and Mitigating Backdoor Attacks in Neural Networks", 2019 IEEE SYMPOSIUM ON SECURITY AND PRIVACY (SP), IEEE, 19 May 2019 (2019-05-19), pages 707-723, XP033617143, DOI: 10.1109/SP.2019.00031 [retrieved on 2019-09-12] sections I-VI; * abstract * | 1-11 | INV. G06F21/55 G06N3/094 <br><br> ADD. G06N3/048 |
| A,D | PETER BUBENIK: "Statistical topological data analysis using persistence landscapes", JOURNAL OF MACHINE LEARNING RESEARCH, MIT PRESS , CAMBRIDGE , MA, US, vol. 16, no. 1, 1 January 2015 (2015-01-01), pages 77-102, XP058069834, ISSN: 1532-4435 * the whole document * | 1-11 | |
| A | US 2022/156563 A1 (ZHANG JIALONG [US] ET AL) 19 May 2022 (2022-05-19) * the whole document * | 1-11 | **TECHNICAL FIELDS SEARCHED (IPC)** <br><br> G06F G06N |

The present search report has been drawn up for all claims

| Place of search | Date of completion of the search | Examiner |
|---|---|---|
| Munich | 14 January 2025 | Rackl, Günther |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5777

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | Publication date | Patent family member(s) | | Publication date |
|---|---|---|---|---|
| US 2022156563 A1 | 19-05-2022 | CN | 114519185 A | 20-05-2022 |
| | | DE | 102021125856 A1 | 19-05-2022 |
| | | GB | 2601898 A | 15-06-2022 |
| | | JP | 2022080285 A | 27-05-2022 |
| | | US | 2022156563 A1 | 19-05-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TIANYU GU ; KANG LIU ; BRENDAN DOLAN-GAVITT ; SIDDHARTH GARG**. Badnets: Evaluating backdooring attacks on deep neural networks. *IEEE Access*, 2019, vol. 7, 47230-47244
- **XIANGYU QI ; JIFENG ZHU ; CHULIN XIE ; YONGYANG**. Subnetreplacement: Deployment-stage backdoor attack againstdeep neural networks in gray-box setting. *ICLR workshop*, 2021
- **YINGQI LIU ; SHIQING MA ; YOUSRA AAFER ; WEN-CHUAN LEE ; JUAN ZHAI ; WEIHANG WANG ; XIANGYU ZHANG**. Trojaning attack on neural networks. *NDSS*, 2018
- **MICHAEL NIELSEN**. Neural Networks and Deep Learning. 30 November 2020

- **T. GU ; K. LIU ; B. DOLAN-GAVITT ; S. GARG**. BadNets: Evaluating Backdooring Attacks on Deep Neural Networks. *IEEE Access*, 2019, vol. 7, 47230-47244
- **M. BARNI ; K. KALLAS ; B. TONDI**. A New Backdoor Attack in CNNS by Training Set Corruption Without Label Poisoning. *2019 IEEE International Conference on Image Processing (ICIP), Taipei, Taiwan*, 2019, 101-105
- **BUBENIK, PETER**. Statistical topological data analysis using persistence landscapes. *J. Mach. Learn. Res.*, 2015, vol. 16 (1), 77-102
- SP 800-22 Rev. 1a. A Statistical Test Suite for Random and Pseudorandom Number Generators for Cryptographic Applications. **LAWRENCE E. BASSHAM**. Technical Report. National Institute of Standards & Technology, 2010